(19) Europäisches Patentamt
European Patent Office
Office européen des brevets

(11) Veröffentlichungsnummer : **0 332 098 B1**

# (12) EUROPÄISCHE PATENTSCHRIFT

(45) Veröffentlichungstag der Patentschrift : **09.09.92 Patentblatt 92/37**

(51) Int. Cl.$^5$ : **E21B 43/22,** B01F 11/00

(21) Anmeldenummer : **89103850.7**

(22) Anmeldetag : **04.03.89**

## (54) Wässrige Tensidmischungen und deren Verwendung bei der Erdölförderung.

(30) Priorität : **10.03.88 DE 3807945**

(43) Veröffentlichungstag der Anmeldung : **13.09.89 Patentblatt 89/37**

(45) Bekanntmachung des Hinweises auf die Patenterteilung : **09.09.92 Patentblatt 92/37**

(84) Benannte Vertragsstaaten : **DE GB**

(56) Entgegenhaltungen :
**US-A- 3 890 239**
**US-A- 4 077 471**

(73) Patentinhaber : **HOECHST AKTIENGESELLSCHAFT**
**Postfach 80 03 20**
**W-6230 Frankfurt am Main 80 (DE)**

(72) Erfinder : **Miller, Dennis, Dr.**
**Waldallee 73**
**W-6239 Eppstein/Taunus (DE)**
Erfinder : **Schmidt, Manfred, dr.**
**Mörikestrasse 9**
**W-6233 Kelkheim (Taunus) (DE)**
Erfinder : **Holst, Arno, Dr.**
**Drususstrasse 3**
**W-6200 Wiesbaden (DE)**
Erfinder : **von Halasz, Sigmar-Peter, Dr.**
**Die Ritterwiesen 1c**
**W-6237 Liederbach (DE)**

EP 0 332 098 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Förderung von Erdöl erhält man normalerweise nur einen geringen Anteil des in der Lagerstätte vorhandenen Erdöls. Um die Ausbeute zu erhöhen, preßt man Wasser in die Lagerstätte ein - sog. Wasserfluten - oder man preßt eine wäßrige Tensidlösung ein - sog. Tensidfluten. Bei diesem Tensidfluten wird das Tensid als wäßrige Lösung oder Dispersion in die Lagerstätte injiziert. Voraussetzung hierfür ist, daß diese Lösungen oder Dispersionen stabil sind. Es hat sich außerdem als besonders günstig für die Entölung erwiesen, wenn diese Lösungen oder Dispersionen in der Lagerstätte mit dem Öl Mikroemulsionen bilden. Die Zusammenhänge zwischen Menge an Mikroemulsion, der Grenzflächenspannung und der Entölung sind Gegenstand von zahlreichen experimentellen und theoretischen Arbeiten. Die Menge an Mikroemulsion wird dabei durch den Solubilisierungsparameter (Volumenverhältnis Öl:Tensid in der Mikroemulsion bei optimaler Salinität) beschrieben. Ein hoher Solubilisierungsparameter ist günstig für die Entölung. Die Art der beim Tensidfluten brauchbaren Tenside hängt von den speziellen Bedingungen der Lagerstätte ab, so etwa von der Temperatur, der Art des Gesteins und der Zusammensetzung des Rohöls. Besonders wichtig ist dabei die Salinität der Lagerstätte, da jedes Tensid nur für einen bestimmten Salinitätsbereich wirksam ist. Die Wirksamkeit der meisten Tenside wird bei hohen Salinitäten durch die schlechte Löslichkeit beeinträchtigt.

Es ist bereits bekannt, beim Tensidfluten Alkylphenolpolyglykolethersulfonate zu nehmen (USA 4 018 278). Eine verbesserte Wirkung wird erreicht, wenn man diese Verbindungen mit anderen Tensiden kombiniert, beispielsweise mit oxalkylierten aliphatischen Alkoholen bzw. oxalkylierten Alkylphenolen (US-A 4 077 471, US-A 4 269 271 und DE-Anmeldung 3 725 938).

Oxalkylierte Alkohole bzw. Phenole zeigen aber einen geringeren Solubilisierungsparameter als die entsprechende Ethersulfonate (Miller: Proc. 4th Eur. Symp. on Enhanced Oil Recovery, Hamburg 1987, S.925-933). Dies beeinträchtigt die Wirkung der Tensidmischungen, die solche nichtionischen Tenside enthalten.

Es wurde nun gefunden, daß Tensidmischungen auf der Basis von Di- oder Trialkylphenolpolyglykolethersulfonaten und Alkyl- bzw. Alkylphenoloxethylaten einen hohen Solubilisierungsparameter bei der Mikroemulsionsbildung haben, wenn das Oxethylat eine lange Alkylkette hat. Solche Tensidmischungen bilden noch in Salzwasser stabile Lösungen oder Dispersionen. Diese Mischungen zeigen aber im Bereich der optimalen Salinität eine zu langsame Trennung in die drei Phasen Salzwasser, Öl und Mikroemulsion. Durch Zugabe eines einfachen Sulfonats, z.B. Alkansulfonat, kann die erwünschte schnelle Phasentrennung erreicht werden.

Gegenstand der Erfindung sind demgemäß wäßrige Tensideinstellungen enthaltend ein Tensidgemisch aus

a) 5 bis 85, vorzugsweise 10 bis 70 Gew.-% eines Ethersulfonats der Formel

$$RO(AO)_mA\ SO_3M$$

wobei R eine Gruppe der Formel

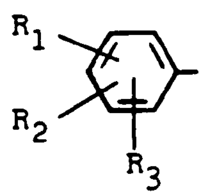

$R_1$ und $R_2$ $C_3$-$C_6$-Alkyl und $R_3$ Wasserstoff oder $C_1$-$C_6$-Alkyl, A eine $-C_2H_4-$ oder $-C_3H_6-$Gruppe oder eine Mischung beider Gruppen,

m eine Zahl von 3 bis 20, vorzugsweise von 4 bis 18 und

M ein Alkalimetallatom oder Ammonium bedeuten,

b) 5 bis 85, vorzugsweise 10 bis 70 Gew.-% eines Polyglykolethers der Formel

$$R_4O(AO)_nH$$

wobei $R_4$ $C_{16}$-$C_{22}$-Alkyl, $C_{16}$-$C_{22}$-Alkenyl oder eine Gruppe der Formel

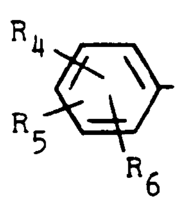

$R_5$ und $R_6$ Wasserstoff oder $C_1$-$C_{12}$-Alkyl, A eine -$C_2H_4$- oder -$C_3H_6$-Gruppe oder eine Mischung beider Gruppen und

n eine Zahl von m-3 bis 20 bedeuten, sowie

c) 10 bis 90, vorzugsweise 20 bis 70 Gew.-% eines primären oder sekundären $C_8$-$C_{22}$-Alkansulfonats, Petrolsulfonats, Olefinsulfonats, Alkylbenzolsulfonats oder deren Mischungen.

Der unterste Wert für n in der Komponente b) ist so definiert, daß für einen gegebenen Wert von m der unterste Wert für n sich dann aus diesem Wert für m minus 3 errechnet.

Der Gesamttensidgehalt in der beschriebenen wäßrigen Einstellung liegt bei etwa 20 bis 80 Gew.-%. Diese wäßrigen Einstellungen werden für das Tensidfluten weiter mit Wasser verdünnt auf einen Gehalt an Tensid von ca. 0,1 bis 10 Gew.-%. Vorzugsweise nimmt man hierfür das mehr oder weniger salzhaltige Wasser aus der Lagerstätte.

Zur Verbesserung der Wirkung kann man dem Flutwasser auch noch Rohöl bzw. Kohlenwasserstoffe oder $C_3$-$C_6$-Alkohole zusetzen. Eine Rohölförderung durch Tensidfluten auf der Grundlage der oben beschriebenen Tensidmischung kann in üblicher Weise mit einem Polymerfluten verbunden werden.

Das oben beschriebene Drei-Komponenten-System zeichnet sich dadurch aus, daß es in Wasser phasenstabil ist und außerdem mit dem Rohöl Mikroemulsionen bildet. Diese Eigenschaften zeigen sich auch in hochsalinen Wässern, etwa mit einem Salzgehalt von mehr als 10 %. Dadurch, daß man hier eine Kombination von einem Di- oder Trialkylphenolpolyglykolethersulfonat mit kurzen Alkylketten und ein Alkyl- oder Alkylphenolalkoxylat mit einer langen Alkylkette nimmt, erreicht man einen höheren Solubilisierungsparameter und dadurch eine bessere Wirkung.

Im Gegensatz dazu werden in der US-A 4 077 471 nur Mischungen von Alkyl- bzw. Alkylphenolethersulfonaten mit Polyglykolethern, die dieselbe hydrophobe Gruppe enthalten, beschrieben. In der DE-Anmeldung 3 725 938 werden solche Mischungen aus Ethersulfonat, Polyglykolethern und Alkansulfonaten beschrieben, die sich von den Mischungen im vorliegenden Fall im wesentlichen durch den Gehalt an Alkylenoxid in der Komponente b) unterscheiden.

Experimenteller Teil

Prüfung des Phasenverhaltens

Für Mikroemulsionsversuche wurden gleiche Mengen Öl und Salzwasser genommen und man beobachtete den Salinitätsbereich, in dem sich das Gemisch in die drei Phasen Salzwasser, Mikroemulsion und Öl trennte. Die Salinität, bei der die Mikroemulsion gleiche Anteile von Öl und Wasser enthält, wird als optimale Salinität bezeichnet. Das Volumenverhältnis Öl/Tensid in der Mikroemulsion bei der optimalen Salinität wird als Solubilisierungsparameter bezeichnet. Der Solubilisierungsparameter ist ein Maß für die Menge an Mikroemulsion, die gebildet wird.

Es wurden auch verschiedene Tensid/Salzwasser-Mischungen ohne Öl mit unterschiedlicher Salinität hergestellt. Nach guter Durchmischung wurden die Proben für 24 Stunden temperiert. Man unterscheidet drei Typen von Phasenverhalten

a) klare Lösung

b) Phasentrennung

c) transparente oder trübe homogene Dispersion.

Als Salz wurde ein Modell-Lagerstättensalz bestehend aus 95 % NaCl, 3 % $CaCl_2$, 1,75 % $MgCl_2$ und 0,25 % $Na_2SO_4$ benutzt. Verschiedene Kohlenwasserstoffgemische dienten als Modellöle (Tabelle 2). Der Tensidgehalt betrug 2 % bezogen auf das Salzwasser.

Beispiele

1. Einfluß der Länge der Alkylkette des Alkoxylates auf den Solubilisierungsparameter

Der Vergleich der zwei Mischungen in Tabelle 1 zeigt, welche Rolle die Länge der Alkylkette des Alkoxylates spielt. Das erfindungsgemäße Gemisch Nr. 1 (mit langer Kette) zeigt einen viel größeren Solubilisierungsparameter als das Vergleichsgemisch Nr. 2.

2. Mikroemulsionsbildung

Tabelle 3 zeigt drei weitere erfindungsgemäße Tensidmischungen, die mit Modellöl I Mikroemulsionen bilden.

3. Phasenverhalten mit und ohne Öl

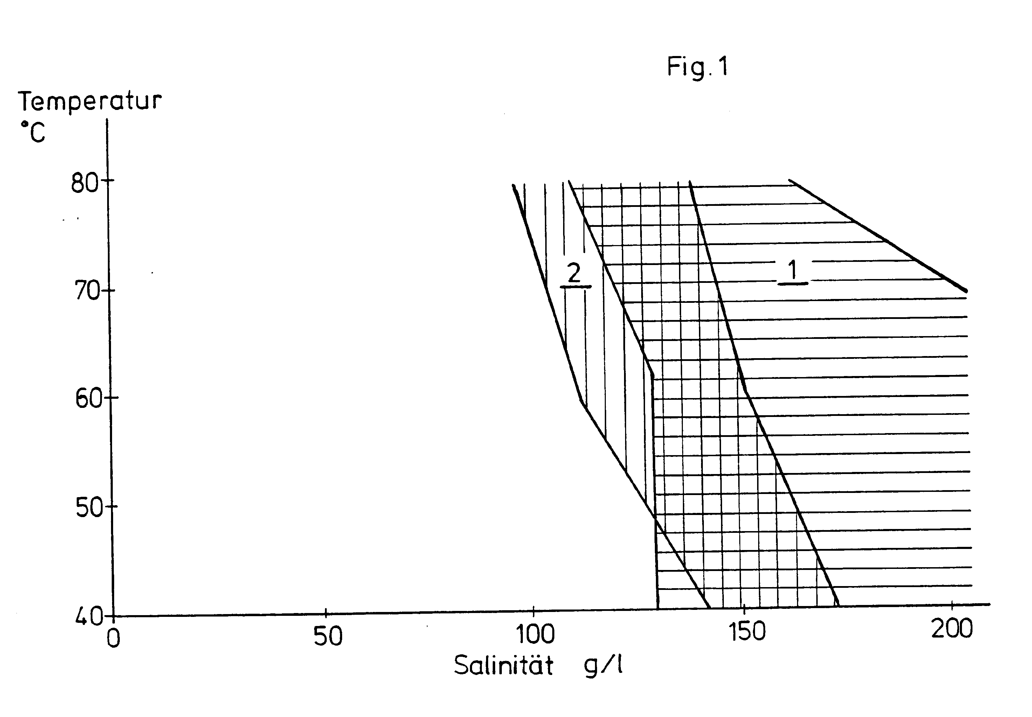

Das Phasenverhalten von Mischung Nr. 6 wird in Abb. 1 in Abhängigkeit von Temperatur und Salinität gezeigt. Diese Mischung besteht aus 30 % $(C_4H_9)_3 \cdot C_6H_2 \cdot O(C_2H_4O)_9C_2H_4SO_3Na$, 30 % $C_{18}H_{37} \cdot C_6H_4 \cdot O(C_2H_4O)_{10}H$ und 40 % sek. Alkansulfonat mit 15,5 C-Atomen.

Die waagrecht schraffierte Fläche 1 bedeutet den Bereich einer stabilen und homogenen Tensid/Salzwasser-Dispersion. Die senkrecht schraffierte Fläche 2 bedeutet Mikroemulsionsbildung mit dem Modellöl III. Die Überlappung dieser beiden Bereiche zeigt, daß die Mischung für die tertiäre Erdölförderung wirksam ist.

**Tabelle 1** Einfluß der Länge der Alkylkette des Oxalkylates

| Tensidmischung | | | | | | | | Phasenverhalten 60°C Modell-Lagerstättensalz | |
|---|---|---|---|---|---|---|---|---|---|
| | | | | | | | Salzwasser + Tensid + Öl | | |
| Nr. | Ethersulfonat | % | Oxalkylat | % | Einfaches Sulfonat | % | Öl* | Optimale Salinität g/1 | Solubilisierungsparameter |
| 1 | $(C_4H_9)_3 \cdot C_6H_2 \cdot O(C_2H_4O)_9C_2H_4SO_3Na$ | 40 | $C_{18}H_{37}C_6H_4 \cdot O(C_2H_4O)_{10}H$ | 40 | Sek. Alkansulfonat mit durchschnittlich 15,5 C-Atomen | 20 | I | 125 | 8.2 |
| | | | | | | | II | 107 | 12.2 |
| 2 | $(C_4H_9)_3 \cdot C_6H_2 \cdot O(C_2H_4O)_9C_2H_4SO_3Na$ | 40 | $C_9H_{19}C_6H_4 \cdot O(C_2H_4O)_{10}H$ | 40 | " | 20 | I | 150 | 4.5 |
| | | | | | | | II | 138 | 6.1 |

*) s. Tabelle 2

Tabelle 2: Modellöle

| Nr. | Beschreibung | Dichte 25°C g/cm³ | Brechungsindex 25°C |
|---|---|---|---|
| I | vorwiegend Alkane | 0,830 | 1,4555 |
| II | Alkane mit ca. 20 % aromatisch/ naphthenische Kohlenwasserstoffe | 0,824 | 1,4572 |
| III | Raffiniertes Öl naphthenisch | 0,881 | 1,4877 |

**Tabelle 3** Mikroemulsionsbildung von erfindungsgemäßen Tensidmischungen

| Tensidmischung | | | | | | | Phasenverhalten 60°C Modell-Lagerstättensalz Salzwasser + Tensid + Modellöl Nr. I | |
|---|---|---|---|---|---|---|---|---|
| Nr. | Ethersulfonat | % | Alkoxylat | % | Einfaches Sulfonat | % | Optimale Salinität g/1 | Solubilisierungsparameter |
| 3 | $(C_4H_9)_3 \cdot C_6H_2 \cdot O(C_2H_4O)_9C_2H_4SO_3Na$ | 40 | $C_{18}H_{37}-O(C_2H_4O)_{10}H$ | 40 | Sek. Alkansulfonat mit durchschnittlich 15,5 C-Atomen | 20 | 140 | 9,5 |
| 4 | $(C_4H_9)_3 \cdot C_6H_2 \cdot O(C_2H_4O)_9C_2H_4SO_3Na$ | 40 | Oleyl-$O(C_2H_4O)_{10}H$ | 40 | " | 20 | 140 | 8,0 |
| 5 | $(C_4H_9)_3 \cdot C_6H_2 \cdot O(C_2H_4O)_{14}C_2H_4SO_3Na$ | 40 | $C_{18}H_{37}-C_6H_4 \cdot O(C_2H_4O)_{11}H$ | 40 | " | 20 | 165 | 8,2 |

s. Tabelle 2

**Adsorption auf Quarz**

Methode: Mehrere Proben bestehend aus 1000 ppm Tensidlösung wurden 24 Stunden mit Quarzsand, (Oberfläche ca. 0,13 $m^2/g$) equilibriert. Die Quarzmenge betrug bis zu 0,35 g pro ml Lösung. Die Flüssigkeit wurde dann abgetrennt und mit den folgenden Methoden analysiert:

a) Zwei-Phasen-Titration zur Bestimmung von anionischen Tensiden

b) U.V.-Adsorption zur Bestimmung von aromatischen Verbindungen

c) Colorimetrische Bestimmung des Komplexes mit $CoCl_2$ und $NH_4SCN$ nach der Extraktion in $C_2H_4Cl_2$. Dabei kann die Menge ethoxylierter Verbindungen gemessen werden.

Aus diesen drei Messungen kann man die Anteile der drei Tenside (einfaches Sulfonat, Ethersulfonat und Ethoxylat) berechnen. Diese Berechnung wird einfacher, wenn nur eines der Tenside einen aromatischen Ring enthält. Aus dem Tensidgehalt in Abhängigkeit von der Quarzmenge wird die Adsorption in mg Tensid pro g Quarz berechnet. Unter den hier verwendeten Versuchsbedingungen entspricht diese Adsorption in etwa dem Grenzwert. Um die Adsorption der verschiedenen Komponenten der Tensidmischung zu vergleichen, benutzt man am besten die spezifische Adsorption

$$a_i'.$$

$$a_i' = \frac{a_i}{w_i}$$

wobei $a_i$ die Adsorption von Komponente i ist und $w_i$ deren Gewichtsanteil in der Tensidmischung. Wenn alle Komponenten denselben Wert von $a_i'$ hätten, gäbe es keine chromatographische Trennung der Tenside.

In der Tabelle 4 wird die spezifische Adsorption $a_i'$ der drei Komponenten einer erfindungsgemäßen Tensidmischung bei hoher Salinität gezeigt. Es gibt kaum Unterschiede in den Werten von

$$a_i'.$$

Als Vergleich wurde die Adsorption a der drei Einzeltenside gemessen. Dieser Vergleichsversuch wurde ohne Salzzugabe durchgeführt, da schon bei mittleren Salinitäten nicht alle drei Einzeltenside löslich sind. Bei den Einzeltensiden ist die Adsorption der nichtionischen Komponenten viel stärker als die der zwei anionischen Tenside. Es gibt in der Mischung offensichtlich eine synergistische Wirkung, die solche Unterschiede in der Adsorption ausgleicht.

Der nahezu identische Wert für die Adsorption

$$a_i'$$

der Tenside in der Mischung zeigt, daß alle Tenside in der Mischung gleich stark adsorbiert werden. Daraus kann man den Schluß ziehen, daß auch bei einem Einsatz dieser Tensidmischung zur Verbesserung der Ausbeute bei der Erdölförderung eine gleichmäßige Adsorption aller drei Tenside am Speichergestein stattfindet. Damit ist verhindert, daß im Sinne einer chromatographischen Trennung Unterschiede in der Adsorption auftreten, wodurch sich die Tensidmischung auftrennen würde und damit dann unwirksam wäre.

**Tabelle 4** Adsorption an Quarz

a) Erfindungsgemäße Tensidmischung
Salinität: 170 g/l, Temperatur 60°C

| Komponente | | |
|---|---|---|
| Formel | % | $a_i'$ mg/g |
| $(C_4H_9)_3 \cdot C_6H_2 \cdot (OCH_2CH_2)_{10}SO_3Na$ | 10 | 1,1 |
| sek. Alkansulfonat mit durchschnittlich 15,5 C-Atomen | 60 | 1,1 |
| $C_{18}H_{37} \cdot (OCH_2CH_2)_{10}OH$ | 30 | 1,0 |

b) Einzeltenside (Vergleichsversuch)
Salinität 0 g/l, Temperatur 60°C

| Tensid | a mg/g |
|---|---|
| $(C_4H_9)_3 \cdot C_6H_2 \cdot (OCH_2CH_2)_{10}SO_3Na$ | < 0,1 |
| sek. Alkansulfonat mit durchschnittlich 15,5 C-Atomen | < 0,1 |
| $C_{18}H_{37} \cdot (OCH_2CH_2)_{10}OH$ | 0,9 |

## Patentansprüche

1. Wäßrige Tensidmischungen enthaltend ein Tensidgemisch aus

a) 5 bis 85, vozugsweise 10 bis 70 Gew.-% eines Ethersulfonats der Formel

$$RO(AO)_mA\ SO_3M$$

wobei R eine Gruppe der Formel

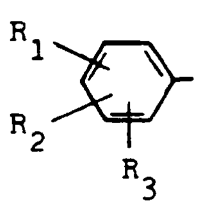

$R_1$ und $R_2$ $C_3$-$C_6$-Alkyl und $R_3$ Wasserstoff oder $C_1$-$C_6$-Alkyl, A eine $-C_2H_4-$ oder $-C_3H_6-$Gruppe oder eine Mischung beider Gruppen,

m eine Zahl von 3 bis 20, vorzugsweise von 4 bis 18 und

M ein Alkalimetallatom oder Ammonium bedeuten,

b) 5 bis 85, vorzugsweise 10 bis 70 Gew.-% eines Polyglykolethers der Formel

$R_4O(AO)_nH$

wobei $R_4$ $C_{16}$-$C_{22}$-Alkyl, $C_{16}$-$C_{22}$-Alkenyl oder eine Gruppe der Formel

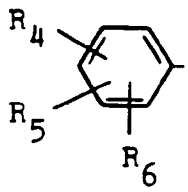

$R_5$ und $R_6$ Wasserstoff oder $C_1$-$C_{12}$-Alkyl, A eine -$C_2H_4$- oder -$C_3H_6$-Gruppe oder eine Mischung beider Gruppen und

n eine Zahl von m-3 bis 20 bedeuten, sowie

c) 10 bis 90, vorzugsweise 20 bis 70 Gew.-% eines primären oder sekundären $C_8$-$C_{22}$-Alkansulfonats, Petrolsulfonats, Olefinsulfonats, Alkylbenzolsulfonats oder deren Mischungen.

2. Verfahren zur Erhöhung der Ausbeute bei der Erdölförderung durch Tensidfluten, dadurch gekennzeichnet, daß man dem Flutwasser eine Tensidmischung nach Anspruch 1 zugibt.

3. Verfahren nach anspruch 2, dadurch gekennzeichnet, daß man dem Flutwasser die Tensidmischung in einer Menge von 0,1 bis 10 Gew.-% zugibt.

## Claims

1. An aqueous surfactant composition containing a surfactant mixture made from

a) 5 to 85% by weight, preferably 10 to 70% by weight, of an ether sulfonate of the formula

$RO(AO)_mA\ SO_3M$

where R denotes a group of the formula

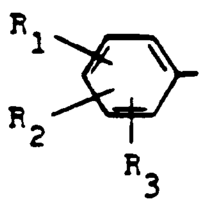

$R_1$ and $R_2$ denote $C_3$-$C_6$alkyl, and $R_3$ denotes hydrogen or $C_1$-$C_6$-alkyl, A denotes a -$C_2H_4$- or -$C_3H_6$- group or a mixture of the two groups,

m denotes a number from 3 to 20, preferably 4 to 18, and

M denotes an alkali metal atom or ammonium,

b) 5 to 85% by weight, preferably 10 to 70% by weight, of a polyglycol ether of the formula

$R_4O(AO)_nH$

where $R_4$ denotes $C_{16}$-$C_{22}$-alkyl, $C_{16}$-$C_{22}$-alkenyl or a group of the formula

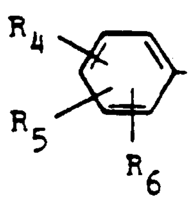

$R_5$ and $R_6$ denote hydrogen or $C_1$-$C_{12}$-alkyl, A denotes a -$C_2H_4$- or -$C_3H_6$- group or a mixture of the two groups, and

n denotes a number from m-3 to 20, and

c) 10 to 90% by weight, preferably 20 to 70% by weight, of a primary or secondary $C_8$-$C_{22}$-alkanesulfonate, petroleumsulfonate, olefinsulfonate, alkylbenzenesulfonate or a mixture thereof.

**2.** A process for increasing the yield during oil recovery by surfactant flooding, which comprises adding a surfactant composition as claimed in claim 1 to the flooding water.

**3.** The process as claimed in claim 2, wherein 0.1 to 10% by weight of the surfactant composition are added to the flooding water.

## Revendications

1.- Mélange aqueux à base de surfactifs qui contiennent un mélange surfactif constitué :

a) de 5 à 85 % en poids, de préférence de 10 à 70% en poids, d'un éther-sulfonate répondant à la formule :

$$RO(AO)_mA\ SO_3M$$

dans laquelle

R représente un radical répondant à la formule:

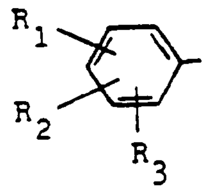

dans laquelle $R_1$ et $R_2$ représentent chacun un alkyle en $C_3$-$C_6$ et $R_3$ représente l'hydrogène ou un alkyle en $C_1$-$C_6$,

A représente un radical $-C_2H_4-$ ou $-C_3H_6-$ ou un mélange de ces deux radicaux,

m désigne un nombre de 3 à 20, de préférence de 4 à 18, et

M représente un atome de métal alcalin ou un ammonium,

b) de 5 à 85 % en poids, de préférence de 10 à 70 % en poids, d'un éther polyglycolique répondant à la formule:

$$R_4O(AO)_nH$$

dans laquelle

$R_4$ représente un alkyle en $C_{16}$-$C_{22}$, un alcényle en $C_{16}$-$C_{22}$ ou un radical répondant à la formule :

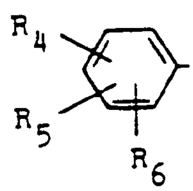

dans laquelle $R_5$ et $R_6$ représentent chacun l'hydrogène ou un alkyle en $C_1$-$C_{12}$,

A représente un radical $-C_2H_4-$ ou $-C_3H_6-$ ou un mélange de ces deux radicaux, et

n désigne un nombre de (m-3) à 20, et

c) de 10 à 90 % en poids, de préférence de 20 à 70% en poids, d'un alcane-sulfonate en $C_8$-$C_{22}$ primaire ou secondaire, d'un produit de sulfonation du pétrole, d'un oléfine-sulfonate, d'un alkylbenzènesulfonate ou de leurs mélanges.

2.- Procédé pour augmenter le rendement lors de l'extraction du pétrole par noyage à l'aide de surfactifs, procédé caractérisé en ce qu'on ajoute à l'eau de noyage un mélange surfactif selon la revendication 1.

3.- Procédé selon la revendication 2 caractérisé en ce que le mélange surfactif est ajouté à l'eau de noyage en une quantité de 0,1 et 10% en poids.

Fig. 1